# FASCICULE DE BREVET EUROPEEN

(11) **EP 3 946 932 B1**
(45) Date de publication et mention de la délivrance du brevet: **07.06.2023**
(21) Numéro de dépôt: 20711191.5
(22) Date de dépôt: 19.03.2020
(51) Int. Cl.: B32B 17/10

(54) **VITRAGE FEUILLETÉ RÉFLÉCHISSANT LES INFRAROUGES**
INFRAROT-REFLEKTIERENDES LAMINIERTES GLAS
LAMINATED GLAZING REFLECTING INFRARED

(30) Priorité: 27.03.2019 FR 1903180
(43) Date de publication de la demande: 09.02.2022
(73) Titulaire: Saint-Gobain Glass France, 92400 Courbevoie (FR)
(72) Inventeur: COMPOINT, François, 75018 PARIS (FR); DIGUET, Antoine, 75009 PARIS (FR)
(74) Mandataire: Saint-Gobain Recherche
(86) Numéro de dépôt international: PCT/EP2020/057608
(87) Numéro de publication internationale: WO 2020/193363

(56) Documents cités:
- EP-A1- 2 090 428
- US-A1- 2011 300 356
- US-A1- 2012 250 146

## Description

L'invention concerne un vitrage feuilleté notamment pour une utilisation comme vitre de toit automobile.

Les vitrages en verres feuilletés sont largement utilisés dans les véhicules, voire dans les bâtiments tout d'abord pour des raisons de sécurité : cette structure garantit en effet la suppression du risque de blessures lié à la projection d'éclats de verre au cas où elle serait détruite ou endommagée.

De tels vitrages doivent également :
- d'une part ne pas laisser passer la totalité du rayonnement solaire incident pour ne pas échauffer excessivement l'espace intérieur du véhicule et/ou limiter la consommation énergétique (due par exemple à une utilisation excessive de l'air conditionné en raison de la quantité de chaleur entrant dans l'habitacle), mais
- d'autre part laisser passer une quantité suffisamment importante de lumière pour éclairer suffisamment l'espace intérieur et maintenir ainsi un confort visuel et une sensation de confort.

Le respect de ces deux exigences, à savoir empêcher l'entrée excessive de rayonnement énergétique et éclairer suffisamment l'espace intérieur, est nécessairement le résultat d'un compromis. Il existe donc une demande pour des vitres feuilletées ayant le meilleur compromis en termes de réflexion de l'énergie thermique tout en conservant une certaine transparence à la lumière.

Pour évaluer la transmission de la chaleur à travers un vitrage feuilleté, on mesure souvent la transmission totale solaire (TTS) selon la norme ISO 13837 avec la convention "A" AM 1.5. Pour évaluer la transmission lumineuse à travers le vitrage dans le domaine du visible (380-780 nm), on peut utiliser par exemple la transmission lumineuse T_{L} telle que mesurée selon la norme NF EN-410.

Pour satisfaire le compromis décrit précédemment, plusieurs configurations de structures feuilletées ont déjà été décrites.

Selon une première possibilité, on connaît l'utilisation de verres teintés qui absorbent une partie du rayonnement et qui bloquent par filtrage une majeure portion du spectre du rayonnement incident, sans distinction entre les différentes parties du spectre solaire (UV-Visible- proche IR). Par exemple la publication WO 2006/108980A2 décrit de tels vitrages pour toit de véhicule automobile. On conserve selon ce modèle une transmission lumineuse TL de l'ordre de 10% pour une TTS de l'ordre de 30%.

Selon d'autres configurations possibles, il a été proposé d'utiliser un intercalaire teinté liant les deux feuilles de verre également optionnellement teintées, notamment un feuillet de PVB (polyvinylbutyral) teinté. On pourra par exemple également se référer à la publication EP0687554A1 pour un exemple d'une telle configuration.

Le fascicule du brevet US6910729 décrit alternativement un vitrage à effet de confort thermique associant un verre électrochrome avec une couche à faible émissivité disposée sur la surface tournée vers l'espace intérieur du véhicule. La demande de brevet EP 1060876 A2 décrit selon une autre solution un vitrage feuilleté constitué par une feuille de verre extérieure, un empilement de protection solaire comprenant deux couches d'argent disposé en face 2 (les faces étant numérotées depuis l'extérieur vers l'intérieur), un feuillet de PVB clair, un feuillet de PVB teinté, et une feuille de verre intérieure, sur laquelle est déposée une couche bas-émissive d'oxyde d'étain dopé au fluor. L'utilisation d'empilements réfléchissants l'infrarouge proche (c'est-à-dire compris entre 780 et 2500 nm), notamment ceux comprenant plusieurs couches à base d'argent, confère cependant une teinte très prononcée au vitrage résultant vu de l'extérieur, en particulier un aspect rougeâtre en réflexion pour des angles d'observation éloignés de la normale à la surface du vitrage, coloration jugée inesthétique et non désirable dans le domaine.

Egalement, diverses et autres combinaisons des systèmes précédents (PVB et/ou verre teintés) ont été proposées. On obtient ainsi en général au final des valeurs de la transmission lumineuse T_{L} de l'ordre de 8 à 20% pour un facteur TTS de l'ordre de 20 à 35%.

Si de telles valeurs donnent globalement satisfaction, les solutions proposées jusqu'à présent sont cependant chères à mettre en œuvre et le prix du vitrage final est relativement élevé, en raison notamment du prix élevé d'un verre teinté dans sa masse et/ou d'un PVB (ou autre intercalaire) teinté dans sa masse. Par teinté dans la masse, on entend que le colorant est introduit lors d'une étape de fabrication du produit (verre ou PVB) de manière à être réparti de façon homogène dans tout le volume dudit produit), par opposition à un verre clair ou un PVB clair qui ne contient pas en principe de tels colorants.

US 2011/300356 A1 divulgue un vitrage feuilleté calorifuge, comprenant au moins deux plaques de verre et un film intermédiaire par lequel lesdites au moins deux plaques de verre sont laminées ensemble, dans lequel ledit film intermédiaire comporte deux sous-films intermédiaires et une feuille de film plastique fonctionnelle disposée entre les deux sous-films intermédiaires et formée avec une couche réfléchissant les infrarouges, et une couche absorbant les infrarouges. Les sous-films intermédiaires sont constitués d'EVA ou de PVB. La couche réfléchissant les infrarouges se présente sous la forme d'un stratifié à couches multiples comportant des films d'oxyde à hauts et bas indices de réfraction laminés alternativement, ou bien un film stratifié à couches multiples comportant deux types de films minces polymériques de différents indices de réfraction laminés alternativement, ou encore un film métallique.

Le problème à la base de l'invention est donc de proposer un verre feuilleté facile et économique à fabriquer, pouvant en particulier servir de toit pour automobile, qui permet de répondre au compromis recherché entre TTS et TL, en particulier une transmission lumineuse dans le visible T_{L} compris entre 8 à 20% et un facteur TTS compris 20 à 35%, de préférence de couleur relativement neutre en aspect extérieur et de préférence encore en aspect intérieur, quel que soit l'angle d'observation, et qui ne comprend pas de verre teinté ou de PVB teinté dans sa masse.

Plus particulièrement, le problème technique précédent est résolu grâce au vitrage feuilleté selon l'invention.

Un tel vitrage présente les caractéristiques suivantes : Il comprend une feuille en verre clair extérieure et une feuille en verre clair intérieure qui sont liées l'une à l'autre au moyen d'un intercalaire. Il comprend la succession des éléments suivants, depuis l'intérieur vers l'extérieur dudit vitrage:
- ladite feuille intérieure de verre clair,
- un empilement de couches réfléchissant le rayonnement infrarouge compris entre 780 nm et 2500 nm,
- l'intercalaire comprenant:
   a) un premier feuillet comprenant ou constitué d'une couche d'un composé polymérique ou d'un vernis, ledit composé polymérique ou ledit vernis comprenant un agent colorant, ledit agent colorant absorbant sensiblement la totalité de la lumière située dans le domaine du visible entre 380 et 780 nm et étant sensiblement transparent au rayonnement infrarouge, notamment au rayonnement infrarouge proche et en particulier au rayonnement infrarouge de longueur d'onde compris entre 800 et 2000 nm,
   b) un second feuillet d'une matière plastique claire (c'est-à-dire non teintée dans sa masse), de préférence d'un thermoplastique, notamment de PVB clair,
- ladite feuille extérieure de verre clair.

Des caractéristiques supplémentaires et avantageuses d'un tel vitrage feuilleté sont données ci-après qui peuvent bien évidemment être combinées entres elles le cas échéant :
- Ledit colorant présente, tel que mesuré par un spectrophotomètre Perkin-Elmer lambda 900, un spectre d'absorption entre 380 et 2000 nm, à une concentration de 0,5% massique dans une couche d'épaisseur d'au moins 10 micromètres, par exemple de 0,25 millimètres, dudit composé polymérique ou dudit vernis, une absorbance moyennée entre 800 et 2000 nm au moins 5 fois inférieure à l'absorbance moyennée entre 380 et 780 nm et de préférence au moins 7 fois inférieure, voire au moins 10 fois inférieure.
- Ledit colorant est noir ou sensiblement noir.
- Ledit colorant présente, dans la matrice dudit composé polymérique et à 25°C, un coefficient d'extinction molaire (ou absorptivité molaire) moyen entre 780 nm et 2000 nm au moins 5 fois inférieur au coefficient d'extinction molaire moyen entre 380 nm et 780 nm et de préférence au moins 7 fois inférieur voire au moins 10 fois inférieur. De façon bien connue, le coefficient d'extinction molaire, également appelé absorptivité molaire ou coefficient d'absorption molaire, caractérise les capacités d'une composition à absorber la lumière. La loi de Beer-Lambert stipule qu'elle ne dépend pas de la concentration de la composition ni de l'épaisseur traversée par la lumière mais de la nature du soluté (ici le colorant) et du solvant (ici la matrice), de la longueur d'onde de la lumière incidente et de la température. Un coefficient d'extinction molaire « moyen » correspond ainsi au sens de la présente invention à la moyenne desdits coefficients, telle que mesurée sur l'intervalle de longueur d'onde considéré.
- L'empilement de couches réfléchissant le rayonnement infrarouge est un empilement comprenant au moins deux couches fonctionnelles à base d'argent séparées par des couches de matériaux diélectriques, en particulier par des oxydes ou des nitrures.
- Le composé polymérique du premier feuillet est choisi parmi des monomères, des oligomères, ou des polymères comprenant au moins une fonction méthacrylate, des époxydes, des vernis comprenant ou constitués de particules dispersées de PVB, latex, polyuréthane ou acrylate, ladite dispersion étant notamment obtenue dans un solvant approprié (polaire ou apolaire) .
- l'épaisseur du premier feuillet est comprise entre 1 et 250 micromètres, de préférence entre 5 et 100 micromètres et de manière très préférée entre 7 et 50 micromètres.
- L'agent colorant est choisi parmi le Sudan Black B^{®} ((2,2-dimethyl-1,3-dihydroperimidin-6-yl)-(4-phenylazo-1-naphthyl)diazene, C₂₉H₂₄N₆, CAS 4197-25-5) ou la Nigrosine Solvent black 5 (CAS 11099-03-9), et de préférence est le Sudan Black B^{®}.
- L'agent colorant représente entre 0,1 et 10% poids du premier feuillet, de préférence entre 0,2 et 3% poids du premier feuillet.
- Le second feuillet d'une matière plastique non colorée est en polyvinylbutyral (PVB), en copolymères d'éthylène et d'acétate de vinyle (EVA), en polyuréthane (PU) ou en poly(chlorure de vinyle) (PVC), de préférence est en PVB.
- Alternativement, le second feuillet est constitué de deux feuilles de polyvinylbutyral entre lesquelles est disposée une feuille de poly(téréphtalate d'éthylène).
- Les feuilles de verre ont une épaisseur comprise entre 0,7 mm et 5 mm et de préférence entre 1,6 mm et 3,1 mm.
- L'empilement de couches est un système de couches minces d'épaisseurs comprises entre 0,5 et 100 nm qui comprend une ou plusieurs couches à base d'argent, de préférence qui comprend au moins deux couches à base d'argent.
- L'intercalaire comprend successivement, par référence à la feuille intérieure de verre : ledit premier feuillet comprenant ou constitué d'une couche d'un composé polymérique ou d'un vernis puis ledit composé polymérique ou ledit vernis comprenant un agent colorant puis ledit second feuillet d'une matière plastique non teintée dans sa masse.
- L'intercalaire comprend successivement, par référence à la feuille intérieure de verre : ledit second feuillet d'une matière plastique non teintée dans sa masse puis ledit premier feuillet comprenant ou constitué d'une couche d'un composé polymérique ou d'un vernis puis ledit composé polymérique ou ledit vernis comprenant un agent colorant.

L'invention se rapporte également à une utilisation d'un vitrage feuilleté tel que précédemment décrit comme toit, vitre latérale, ou lunette arrière de véhicules automobiles. Egalement, l'invention porte sur un procédé de fabrication d'un vitrage feuilleté tel que décrit précédemment, comprenant au moins une première et une deuxième feuilles de verre, les deux feuilles étant liées entre elles par un intercalaire thermoplastique caractérisé en ce qu'il comprend les étapes suivantes :
- dépôt d'un empilement de couches réfléchissant le rayonnement infrarouge compris entre 780 nm et 2500 nm sur une face interne de la première feuille de verre,
- dépôt sur ledit empilement d'une couche polymérique ou d'un vernis comprenant un agent colorant, ledit agent colorant absorbant sensiblement la totalité de la lumière située dans le domaine du visible et étant sensiblement transparent aux infrarouges,
- séchage et/ou éventuellement durcissement de la couche polymérique ou du vernis comprenant l'agent colorant,
- assemblage de la feuille de verre revêtue de l'empilement de couches et de la couche polymérique colorée avec un intercalaire thermoplastique transparent non coloré, en particulier un PVB non coloré, et avec la deuxième feuille de verre, de telle sorte que la couche polymérique colorée soit en contact direct avec ledit intercalaire,
- dégazage pendant lequel l'air piégé entre les feuilles de verre et l'intercalaire thermoplastique est éliminé, et
- traitement thermique sous pression et/ ou sous vide du verre feuilleté à une température comprise entre 100 et 200°C pendant lequel l'assemblage du vitrage feuilleté est effectué.

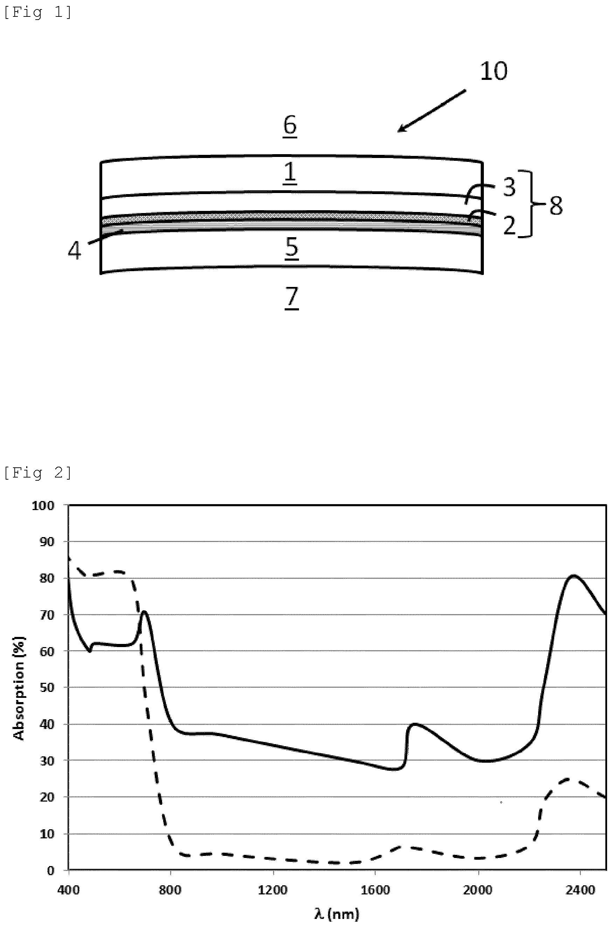

A titre d'exemple non limitatif et pour une meilleure compréhension de la présente invention, on a représenté sur la figure 1 jointe en annexe un mode de réalisation d'un vitrage selon l'invention vu selon une coupe transversale.

Ce mode de réalisation est particulièrement adapté à la réalisation d'une structure de toit vitré pour automobile mais pourrait également être utilisé en tant que lunette arrière, voire comme vitrage latéral.

Le vitrage feuilleté 10 selon l'invention comprend deux feuilles de verre clair 1 et 5 c'est à dire non teintées dans leur masse. En particulier, de tels vitrages sont des verres classiquement obtenus par un procédé float. De tels verres non teintés peuvent notamment présenter une transmission lumineuse T_{L} d'au moins 88%, et le plus souvent de l'ordre de 90%.

Le vitrage sépare l'espace intérieur 7 de l'extérieur 6 du véhicule et peut être bombé.

Les feuilles de verre 1 et 5 individuelles du vitrage feuilleté selon l'invention sont réalisées en verre. Elles forment avec l'intercalaire 8 qui les relie la structure feuilletée. Les vitres ont une épaisseur comprise de préférence entre 1 mm et 5 mm. Pour des raisons d'économie de poids, les feuilles de verre doivent permettre d'atteindre un compromis aussi bon que possible entre une faible épaisseur et une forte sécurité, en particulier lorsque le vitrage feuilletée est monté dans une automobile. Un tel compromis peut être obtenu notamment avec des feuilles de verre dont l'épaisseur est comprise entre 1,5 mm et 3,1 mm. Selon l'invention, sur la feuille de verre intérieur 5 est déposé un empilement 4 de couches réfléchissant sélectivement les infrarouges. De tels empilements sont bien connus et en particulier comprennent une combinaison de couches à base de métaux précieux, en particulier, à base d'argent et de matériaux diélectriques souvent appelées couches interférentielles. De manière connue, ces empilements sont constitués d'une succession de couches de matériaux diélectriques tels que des oxydes et/ou des nitrures et de couches métalliques dont des couches à base d'argent dont les propriétés dites « bas émissives » permettent de réfléchir sélectivement l'infrarouge dit proche ou solaire (de longueur d'onde compris entre 780 nm et 2000 nm) et de laisser passer au moins en partie et de préférence plus de 70%, voire plus de 80% de la lumière visible du spectre solaire (de longueur d'onde compris entre 380 et 780 nm), notamment en minimisant la réflexion lumineuse au moyen desdites couches interférentielles ou de combinaison(s) de couches interférentiels. En outre, la présence d'un tel empilement sur la face interne de la feuille intérieure permet en hiver de maintenir la chaleur dans l'habitacle.

Les empilements selon l'invention sont notamment sélectionnés de telle façon que leur résistance par carré soit inférieure à 1,5 Ohms par carré, de préférence encore inférieure à 1,2 Ohms par carré, voire même inférieure à 1,1 Ohms par carré. La résistance par carré peut par exemple être mesurée à l'aide d'un appareil type SRM-14T de Nagy Mess-systems.

De tels empilement peuvent comprendre jusqu'à plusieurs dizaines de couches dont l'épaisseur est de l'ordre de 1 à 30 nm et sont à l'heure actuelle déposées par les techniques dites de pulvérisation cathodique, souvent assistées par magnétron.

Les empilements préférés selon l'invention comprennent deux, et de préférence trois ou même quatre couches à base d'argent.

Des exemples de tels empilements sont notamment décrits dans les publications WO2005/051858A1 ou WO2013/107983.

La feuille de verre intérieure 5 munie de l'empilement 4 est ensuite liée solidairement à la feuille de verre par l'intercalaire 8.

L'intercalaire 8 est un composite qui comprend au moins un feuillet intermédiaire 3 d'un matériau plastique clair (c'est-à-dire dans lequel aucun colorant n'a été ajouté pour la teinter, c'est-à-dire pour en faire varier la couleur ou la quantité de lumière la traversant). Ce feuillet intermédiaire est, de manière connue, fondu en autoclave entre les deux feuilles de verre pour les lier entres elles. Le polyvinylbutyral (PVB), qui peut être éventuellement acoustique, s'est avéré être le matériau qui convient le mieux pour constituer un tel feuillet intermédiaire 3, et on l'utilise dans la plupart des cas en des épaisseurs de 0,38 mm ou de 0,76 mm.

En remplacement du PVB on peut aussi utiliser selon l'invention tous les autres matériaux connus pour constituer un feuillet intermédiaire fondu entre deux feuilles de verre, par exemple des thermoplastiques tels que des copolymères d'éthylène et d'acétate de vinyle (EVA), le polyuréthane (PU) ou le poly(chlorure de vinyle) (PVC).

Alternativement mais de façon moins préférée, le feuillet de PVB peut être remplacé par un feuillet constitué d'un système de couches comprenant par exemple une couche de support en poly(téréphtalate d'éthylène) (PET) incorporé entre deux couches de PVB. De cette manière, on obtient un feuillet en trois couches pour relier les verres individuels 1, 5 en la structure feuilletée 10.

Selon l'invention, l'intercalaire 8 comprend en outre, en dessous du feuillet clair 3 de PVB classiquement utilisé dans la technique, c'est-à-dire entre l'empilement de couches 4 et ledit feuillet intermédiaire 3, une couche ou un feuillet supplémentaire 2 comprenant un agent colorant. Sur la figure 1 on a représenté un intercalaire comprenant successivement, depuis l'intérieur 7 vers l'extérieur 6, la couche ou feuillet 2 puis le feuillet 3. On ne sortirait cependant pas de l'invention si on intervertissait l'ordre de succession de ces deux feuillets, bien que cette configuration soit moins préférée.

Cette couche supplémentaire 2 peut être avantageusement constituée par une couche d'un composé polymère. Un tel polymère peut être notamment du type décrit dans les publications WO2018/178559, WO2018/178547 ou encore WO2018/115768, en particulier peut être ou comprendre un polymère du type (métha)crylate ou époxyde.

Selon l'invention la couche polymérique 2 peut être avantageusement obtenue à partir d'une composition liquide comprenant des composés (méth)acrylates choisis parmi des monomères, des oligomères, ou des polymères comprenant au moins une fonction méthacrylate. Par exemple, la composition liquide comprend au moins un oligomère uréthane-acrylique aliphatique, au moins un monomère (méth)acrylate mono-, bi ou tri- fonctionnel, au moins un initiateur de polymérisation et l'agent colorant.

Selon un mode de réalisation possible, la composition liquide comprend en pourcentage massique par rapport à la masse totale des composés (méth)acrylates, de 30 à 80% en masse d'au moins un oligomère uréthane-acrylique aliphatique et de 20 à 70% en masse d'au moins un monomère (méth)acrylate mono ou bi-fonctionnel.

Avantageusement, l'agent colorant est présent à raison d'une quantité comprise entre 0,01% et 10% en masse par rapport à la masse totale des composés polymériques présents dans la couche de composé polymère. La couche polymérique 2 peut en outre comprendre un agent promoteur d'adhésion.

Le dépôt de la couche polymérique 2 sur l'empilement de couches 4 peut être effectué par application à température ambiante de la composition liquide décrite précédemment, par enduction au rouleau, par aspersion, par trempage, par enduction au rideau ou par pulvérisation.

La couche polymérique 2 est avantageusement ensuite durcie par séchage à une température inférieure à 200°C, par réticulation UV, ou par faisceau d'électrons.

L'épaisseur de la couche polymérique 2 durcie peut être comprise entre 1 et 250 micromètres, typiquement entre 5 et 50 micromètres.

Selon un mode possible, on peut préalablement traiter la surface de l'empilement de couches sur laquelle est déposée la couche polymérique colorée et/ ou la surface de la face de l'intercalaire thermoplastique en contact avec la couche polymérique par un agent promoteur d'adhésion.

Ledit polymère sert de matrice à un colorant (ou agent colorant) spécifiquement choisi pour ses qualités d'absorption de la lumière située dans le domaine du visible (380-780 nm) mais également sensiblement transparent aux infrarouges proches, notamment ceux compris entre 780 et 2000 nm, au sens décrit ci-après. Par exemple on peut choisir avantageusement les colorants du type Sudan et en particulier le colorant Sudan Black B, dont la formule développée est donnée ci-dessous :

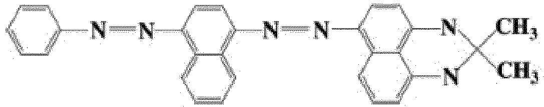

Bien entendu, la présente invention n'est pas limitée à un tel composé et tout colorant présentant, dans sa matrice plastique, un faible coefficient d'absorption des infrarouges compris entre 780 nm et 2000 nm, peut être utilisé selon l'invention et un fort coefficient d'absorption dans le domaine du visible peut être utilisé. Le colorant utilisé est donc en principe noir mais on peut également utiliser des colorants qui n'absorbent pas la totalité de la lumière visible mais au moins 80% voire au moins 90% de celle-ci, et qui présente alors une légère coloration, bien que sombre.

Selon un autre mode de réalisation, la couche polymérique 2 comprenant le colorant peut être déposée sur la feuille de verre interne 5 muni de l'empilement 4 sous la forme d'un vernis à base dudit colorant. Un tel vernis est par exemple constitué par une solution liquide de particules dispersées de PVB, latex, polyuréthane ou acrylate dans un solvant approprié (polaire ou apolaire), c'est-à-dire permettant de dissoudre le colorant pour réaliser son dépôt sous forme d'une couche homogène.

Avantageusement, ledit colorant est choisi de telle manière qu'il présente, dans la couche supplémentaire 2 dans lequel il est présent dans l'empilement et à une concentration de 0,5% du poids total de ladite matrice (ou du vernis) et pour une épaisseur de la couche d'au moins 5 micromètres et pouvant aller jusqu'à 0,25 mm, de préférence comprise entre 10 et 40 micromètres, un rapport, entre son absorbance intégrée entre 380 et 780 nm et son absorbance intégrée entre 780 nm et 2000 nm, supérieur à 5, de préférence supérieur à 7, voire même supérieur à 10.

Selon un autre mode possible de sélection de l'agent colorant, celui-ci peut présenter, dans la matrice dudit composé polymérique et à 25°C, un coefficient d'extinction molaire moyen entre 780 nm et 2000 nm au moins 5 fois inférieur au coefficient d'extinction molaire moyen entre 380 nm et 780 nm, et de préférence au moins 7 fois inférieur, voire au moins 10 fois inférieur.

La structure feuilletée 10 comprend enfin une autre feuille de verre extérieure en verre clair 1, qui surplombe l'intercalaire 8, au contact de préférence direct avec le feuillet 3, et qui complète la structure feuilletée.

Les vitrages feuilletés selon l'invention présentent de préférence dans le système de colorimétrie international L, a*, b* :
- en transmission : des valeurs de L inférieure à 60, voire inférieure à 55 et des valeurs de a* et b* dont la valeur absolue est inférieure à 5 et de préférence est inférieure à 3. De préférence encore, lesdites valeurs sont négatives ou très proches de zéro.
- en réflexion extérieure des valeurs de L inférieure à 35, voire inférieure à 30 et des valeurs de a* et b* dont la valeur absolue est inférieure à 5 et de préférence est inférieure à 3. De préférence encore, lesdites valeurs sont négatives ou très proches de zéro.
- en réflexion intérieure des valeurs de L inférieure à 40, voire inférieure à 35 et des valeurs de a* et b* dont la valeur absolue est inférieure à 5 et de préférence est inférieure à 3. De préférence encore, lesdites valeurs sont négatives ou très proches de zéro.

Un vitrage feuilleté selon l'invention présente ainsi en outre avantageusement une couleur relativement neutre non seulement en réflexion extérieure amis également en réflexion intérieure.

La fabrication de la structure feuilleté 10 précédemment décrite et en particulier l'intégration de la couche supplémentaire 2 au sein de l'intercalaire thermoplastique 8, en combinaison avec un feuillet plastique 3 (notamment en PVB clair) classiquement utilisé pour lier les deux feuilles de verre d'un vitrage feuilleté, peut notamment être réalisée selon un procédé tel que décrit dans les demandes de brevet WO2018/178559, WO2018/178547 ou encore WO2018/115768 auxquelles on se référera pour plus de détails sur la mise en œuvre d'une telle fabrication.

Plus particulièrement, un tel procédé de fabrication d'un vitrage feuilleté comprend les étapes suivantes :
- dépôt par les techniques de pulvérisation cathodique sous vide d'un empilement 4 réfléchissant les infrarouges tel que décrit précédemment, sur la face interne d'une première feuille de verre intérieure 5,
- éventuellement mise en forme dudit vitrage telle qu'un bombage ou une trempe,
- dépôt par voie liquide, notamment par enduction au rouleau, par aspersion, par trempage, par enduction au rideau ou préférentiellement par pulvérisation (spray-coating) sur la face interne de ladite première feuille de verre (feuillet 5 muni de l'empilement 4) d'une couche polymérique en matière plastique 2 comprenant l'agent colorant ou d'un vernis comprenant l'agent colorant,
- séchage et éventuellement durcissement de la couche polymérique 2,
- assemblage de la feuille de verre 5 revêtue de la couche polymérique colorée 2 avec un intercalaire thermoplastique transparent 3 non coloré, en particulier en PVB non coloré, et avec la deuxième feuille de verre 1, de telle sorte que la couche polymérique colorée soit en contact direct avec ledit intercalaire,
- dégazage pendant lequel l'air piégé entre les feuilles de verre et l'intercalaire thermoplastique 8 est éliminé, et
- traitement thermique sous pression et/ou sous vide du verre feuilleté à une température comprise entre 60 et 200°C. Utilisé comme vitrage feuilleté notamment pour une application comme toit vitré pour automobile, le vitrage selon l'invention permet de résoudre le problème technique précédemment décrit grâce à sa structure particulière. Il permet en particulier de cumuler les avantages suivants :
- Un faible coût des matériaux entrant dans sa composition puisqu'il ne contient pas les éléments les plus onéreux présents dans les structures actuelles (en particulier pas de PVB initialement coloré dans sa masse, pas de verre coloré dans sa masse) et donc un faible coût de fabrication. En outre, les dépôts par voie liquide utilisables selon l'invention sont en général peu coûteux du fait d'une grande vitesse de ligne et les colorants utilisés sont commerciaux et peu onéreux.
- Une neutralité de la couleur extérieure du vitrage, en particulier à des angles de vision élevés. En effet, la couleur en réflexion de l'empilement de couches minces réfléchissant les infrarouges est fortement atténuée au passage de la couche polymérique comprenant le colorant.
- Une neutralité de la couleur intérieure du vitrage, même à des angles de vision élevés.
- La possibilité d'ajuster la transmission lumineuse du vitrage en ajustant la concentration massique de colorant dans la couche polymérique jusqu'à des valeurs pouvant aller jusqu'à 5% voire 10% du poids total de ladite couche.
- Des propriétés de contrôle solaire optimales du vitrage feuilleté obtenues :
   a) grâce à la présence sur la première feuille de verre d'un l'empilement qui réfléchit l'infrarouge solaire mais laisse passer une majeure partie du rayonnement dans le domaine du visible,
   b) en raison de la nature et du positionnement de l'agent colorant au sein du vitrage : le rayonnement solaire incident traverse d'abord la couche comprenant l'agent colorant, dans lequel une partie ajustable de la lumière visible (comprise entre 380 et 780 nm) est absorbée en fonction de la concentration du colorant. Le rayonnement résiduel, comprenant pour majeure partie la portion infrarouge du spectre solaire, est réfléchi par l'empilement de couches vers la couche comprenant l'agent colorant. L'agent colorant n'absorbant pas le rayonnement dans le domaine de l'infrarouge proche, on n'observe pas d'échauffement supplémentaire du vitrage et par suite de l'habitacle du véhicule.

De plus les réflexions lumineuses dans le domaine du visible sont faibles typiquement inférieur à 15%, voire inférieures à 10%, des deux côtés du vitrage, ce qui permet d'assurer aussi bien une bonne esthétique extérieure et un confort intérieur amélioré, notamment de nuit.

L'empilement de couches est avantageusement choisi pour laisser passer une quantité suffisamment importante de lumière pour éclairer suffisamment l'espace intérieur et maintenir ainsi un confort visuel et une sensation de confort. Ainsi on peut choisir avantageusement un empilement de couches qui, lorsqu'il est déposé sur un verre clair d'épaisseur 2,1 mm, conduit à un vitrage présentant une transmission lumineuse T_{L} au sens précédemment décrit d'au moins 50%, voire d'au moins 60% ou même d'au moins 70%.

On donne ci-après un exemple de réalisation d'un vitrage selon l'invention :

### A- Fabrication d'une structure feuilletée selon l'invention :

On prépare un échantillon A, d'une structure laminée telle que décrite précédemment en relation avec la figure 1, de dimensions 10 × 10 cm².

L'échantillon A est obtenue de la manière suivante:
- On dépose sur un premier verre clair d'épaisseur 2,1 mm commercialisé par la société déposante sous la référence Planiclear^{®} (T_{L} d'environ 90%, non coloré) un empilement de couches par les techniques de pulvérisation cathodique assistée par magnétron. L'empilement comprend trois couches d'argent et est décrit dans l'exemple 14 de la publication WO2005051858. Sa résistance par carré est de 1,0 Ohm/carré, telle que mesurée à l'aide d'un appareil type SRM-14T de Nagy Mess Systems).
- Sur ce premier verre clair, on dépose une composition liquide comprenant un oligomère acrylate de type Sartomer CN9002 (oligomère uréthane-acrylate aliphatique bi-fonctionnel) et de monomère SR 410 (monomère acrylique aromatique monofonctionnel), préparée selon un ratio pondéral 50/50. Un colorant de type Black Sudan B est ajouté à la formulation d'acrylate à raison d'une proportion de 0,5 % en poids par rapport au poids total de la composition initiale ainsi qu'une quantité d'un photo-initiateur Speedcure 73, égale à 2% en poids du mélange obtenu, est ajoutée pour induire la polymérisation.

La composition liquide ainsi obtenue est déposée avec une barre Mayer sur le substrat de verre revêtue de l'empilement et au-dessus de celui-ci pour obtenir une couche humide d'épaisseur d'environ 20 micromètres. La couche ainsi obtenue est durcie par irradiation UV (dose UVB d'environ 280 mJ/cm², vitesse de défilement de 16 m/min). L'épaisseur de la couche colorée sèche est d'environ 10-15 µm.

Un feuillet en PVB clair d'épaisseur 0,76 mm, commercialisé sous la référence Saflex RK11 ^{®} par la société Eastman, est posé sur la première feuille de verre revêtue de la couche colorée et une deuxième feuille de verre clair identique à la première est apposée sur l'intercalaire de façon à refermer le vitrage feuilleté. L'ensemble est placé sous autoclave pendant 30 minutes, à 130°C sous une pression de 12 bars. Au cours de cette étape sous autoclave, on peut éventuellement observer une diffusion du colorant à l'intérieur du PVB, qui tend à homogénéiser la densité de surface du colorant.

### B- Caractérisation de la structure feuilletée selon l'invention :

Les caractérisations optiques du vitrage tel que décrit précédemment sont réalisées avec un spectrophotomètre Lambda900 de la société Perkin Elmer.

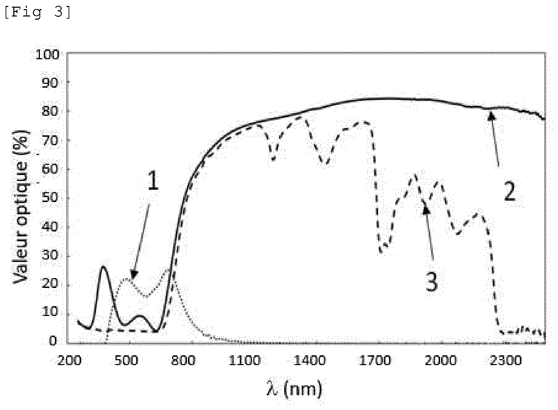

Sur la figure 3 ci-jointe on a reporté les spectres de transmission (courbe 1) et de réflexion du vitrage feuilleté obtenu selon l'exemple précédent. Les spectres de réflexion sont mesurés à la fois sur la face extérieure du vitrage (côté verre extérieur, courbe 3) et sur la face intérieure du vitrage (côté verre intérieur, courbe 2).

On observe que la réflexion des longueurs proches de l'infrarouge, dans le domaine de longueurs d'onde compris entre 650 et 900 nm, est quasiment identique quelle que soit la face du vitrage mesurée (intérieure ou extérieure). Une telle caractéristique illustre l'absence d'absorption du colorant Black Sudan B utilisé dans le domaine de l'infrarouge proche.

En outre, la réflexion de la lumière visible sur la face extérieure est faible (R_{L} < 10%). La couleur observée à l'œil nu apparait en outre très peu marquée et sensiblement neutre. On reporte dans le tableau 1 ci-après les principales données colorimétrie du vitrage feuilleté selon l'invention :

**[Table 1]**

| **Valeur** | **Transmission** | **Couleur en réflexion extérieure** | **Couleur en réflexion intérieure** |
|---|---|---|---|
| L* | 50 | 25 | 34,3 |
| a* | -1,3 | 0,4 | -4,7 |
| b* | -1,8 | -1,2 | -2,6 |

La transmission lumineuse T_{L} est en outre efficacement réduite par la couche colorée à base d'acrylate, la TL intégrée à partir du spectre de la figure 3 étant mesurée à 18%. Le vitrage feuilleté obtenu apparait visuellement gris foncé en transmission.

Le TTS mesurée selon la norme ISO 13837 convention A, AM1.5 à partir du spectre de la figure 3 est de 26%, très proche des valeurs obtenues pour les configurations de l'art antérieur précédemment décrites et basées sur l'utilisation de PVB et/ou de verre coloré.

Selon l'invention, il apparaît possible de réduire encore la transmission lumineuse et la transmission totale énergétique du vitrage en agissant sur la concentration d'agent colorant, jusqu'à des niveaux pouvant aller jusqu'à des TL de l'ordre de 5% et une TTS de l'ordre de 15%.

### C- Choix de l'agent colorant selon l'invention :

Sur la figure 2 ci-après sont reportés :
- le spectre d'absorption d'un feuillet de 0,38 mm de PVB coloré dans sa masse RB17 commercial (courbe en trait plein),
- le spectre d'absorption d'un feuillet de 0,25 mm d'un feuillet en acrylate telle que décrite précédemment et comprenant 0,5% en poids de l'agent colorant Black Sudan B (courbe en trait pointillé).

La comparaison des deux spectres montre clairement que le feuillet contenant le colorant noir Soudan B absorbe fortement dans le domaine du visible, le colorant absorbant sensiblement la totalité du visible et très peu dans le domaine de l'infrarouge proche, notamment entre 800 et 2000 nm. Plus particulièrement, on voit sur cette figure 2 l'absorption moyenne du feuillet acrylate entre 800 et 2000 nm est inférieure d'un rapport d'au moins 5, voire d'au moins 7 ou même d'au moins 10 par rapport à son absorption moyenne dans le domaine du visible (380-780 nm).

Au contraire, le feuillet comprenant le PVB coloré RB17 commercial absorbe une part substantielle du rayonnement IR, notamment compris entre 800 et 2000 nm.

Cette propriété du feuillet (ou de la couche) comprenant l'agent colorant et son positionnement spécifique dans un vitrage selon l'invention, entre le rayonnement solaire incident et l'empilement de couches réfléchissant les IR, permet ainsi de prévenir l'échauffement du vitrage, notamment sous forte insolation, tout en préservant sa sélectivité.

Dans un mode de réalisation préféré, le vitrage feuilleté selon l'invention réfléchit plus de 50 %, voire plus de 70% de la partie IR du rayonnement solaire incident vers le côté extérieur. Selon un autre avantage de la présente invention, vu de l'extérieur, le vitrage feuilleté peut présenter un aspect sombre ou encore un effet miroir (partiel) sans coloration particulière notoire visible et non désirée. On évite en particulier tout effet coloré du vitrage vu de l'extérieur, usuellement due à la présence de l'empilement de couches réfléchissantes dans le vitrage, qui présente plus souvent un aspect très coloré en réflexion. Avantageusement, selon les réalisations selon l'invention la présence dans l'intercalaire de l'agent colorant entre l'empilement de couches et l'extérieur permet d'atténuer la couleur initiale issue de la réflexion du rayonnement solaire sur l'empilement, jusqu'à des niveaux pas ou peu perceptible par l'œil humain.

Le vitrage feuilleté selon l'invention est particulièrement adapté pour être utilisé dans des vitres de toit, mais aussi des vitres latérales ou des vitres arrière de véhicules, en adaptant par exemple la concentration de l'agent colorant dans l'intercalaire. Le vitrage feuilleté donne une sensation accrue de confort thermique ainsi qu'une certaine luminosité à l'intérieur du véhicule, le confort thermique accru étant obtenu au moyen d'une sélectivité élevée en termes de transmission de lumière et de transmission d'énergie.

## Revendications

1. Vitrage feuilleté comprenant une feuille en verre clair (1) extérieure et une feuille en verre clair intérieure (5) qui sont liées l'une à l'autre au moyen d'un intercalaire (8), comprenant la succession des éléments suivants, depuis l'intérieur (6) vers l'extérieur (7) dudit vitrage:
- ladite feuille intérieure (5) de verre clair,
- un empilement de couches (4) réfléchissant le rayonnement infrarouge compris entre 780 nm et 2500 nm,
- ledit intercalaire (8) comprenant:
a) un premier feuillet (2) comprenant ou constitué d'une couche d'un composé polymérique ou d'un vernis, ledit composé polymérique ou ledit vernis comprenant un agent colorant, ledit agent colorant absorbant sensiblement la totalité de la lumière située dans le domaine du visible entre 380 et 780 nm et étant sensiblement transparent au rayonnement infrarouge, notamment de longueur d'onde compris entre 800 et 2000 nm,
b) un second feuillet (3) d'une matière plastique non teintée dans sa masse, de préférence thermoplastique, notamment un PVB clair,
- ladite feuille extérieure (1) de verre clair.

2. Vitrage feuilleté selon la revendication 1, dans lequel ledit colorant présente, tel que mesuré par un spectrophotomètre Perkin-Elmer lambda 900, un spectre d'absorption entre 380 et 2000 nm, à une concentration de 0,5% massique dans une couche d'épaisseur 0,25 millimètres dudit composé polymérique ou dudit vernis, une absorbance moyennée entre 800 et 2000 nm au moins 5 fois inférieure à l'absorbance moyennée entre 380 et 780 nm et de préférence au moins 7 fois inférieure, voire au moins 10 fois inférieure.

3. Vitrage feuilleté selon la revendication 1, dans lequel ledit colorant présente, dans la matrice dudit composé polymérique et à 25°C, un coefficient d'extinction molaire moyen entre 780 nm et 2000 nm au moins 5 fois inférieur au coefficient d'extinction molaire moyen entre 380 nm et 780 nm, et de préférence au moins 7 fois inférieur, voire au moins 10 fois inférieur.

4. Vitrage feuilleté selon l'une des revendications précédentes, dans lequel l'empilement de couches réfléchissant le rayonnement infrarouge est un empilement comprenant au moins deux couches fonctionnelles à base d'argent séparées par des couches de matériaux diélectriques, en particulier par des oxydes ou des nitrures.

5. Vitrage feuilleté selon l'une des revendications précédentes, dans lequel le composé polymérique du premier feuillet (2) est choisi parmi des monomères, des oligomères, ou des polymères comprenant au moins une fonction méthacrylate, des époxydes, des vernis comprenant des particules dispersées de PVB, latex, polyuréthane ou acrylate.

6. Vitrage feuilleté selon l'une des revendications précédentes, dans lequel l'agent colorant est choisi parmi le Sudan Black B^{®} (CAS 4197-25-5) ou la Nigrosine Solvent black 5 (CAS 11099-03-9), et de préférence est le Sudan Black B^{®}.

7. Vitrage feuilleté selon l'une des revendications précédentes, dans lequel l'agent colorant représente entre 0,1 et 10% poids du premier feuillet, de préférence entre 0,2 et 3% poids du premier feuillet.

8. Vitrage feuilleté selon l'une des revendications précédentes, dans lequel le second feuillet (3) d'une matière plastique non colorée est en polyvinylbutyral (PVB), en copolymères d'éthylène et d'acétate de vinyle (EVA), en polyuréthane (PU) ou en poly(chlorure de vinyle) (PVC), de préférence est en PVB.

9. Vitrage feuilleté selon l'une des revendications 1 à 7, **caractérisé en ce que** le second feuillet (3) est constitué de deux feuilles de polyvinylbutyral entre lesquelles est disposée une feuille de poly(téréphtalate d'éthylène).

10. Vitrage feuilleté selon l'une des revendications précédentes, **caractérisée en ce que** les feuilles de verre ont une épaisseur comprise entre 0,7 mm et 5 mm et de préférence entre 1,6 mm et 3,1 mm.

11. Vitrage feuilleté selon l'une des revendications précédentes, dans lequel l'empilement de couches est un système de couches minces d'épaisseurs comprise entre 0,5 et 100 nm qui comprend une ou plusieurs couches à base d'argent, de préférence qui comprend au moins deux couches à base d'argent.

12. Vitrage feuilleté selon l'une des revendications précédentes, dans lequel l'intercalaire comprend successivement, par référence à la feuille intérieure de verre : ledit premier feuillet (2) comprenant ou constitué d'une couche d'un composé polymérique ou d'un vernis puis ledit composé polymérique ou ledit vernis comprenant un agent colorant puis ledit second feuillet (3) d'une matière plastique non teintée dans sa masse.

13. Vitrage feuilleté selon l'une des revendications précédentes, dans lequel l'intercalaire comprend successivement, par référence à la feuille intérieure de verre : ledit second feuillet (3) d'une matière plastique non teintée dans sa masse puis ledit premier feuillet (2) comprenant ou constitué d'une couche d'un composé polymérique ou d'un vernis puis ledit composé polymérique ou ledit vernis comprenant un agent colorant.

14. Utilisation d'un vitrage feuilleté selon l'une des revendications 1 à 13 comme toit, vitre latérale, ou lunette arrière de véhicules automobiles.

15. Procédé de fabrication d'un vitrage feuilleté selon l'une des revendications 1 à 13, comprenant au moins une première et une deuxième feuilles de verre, les deux feuilles étant liées entre elles par un intercalaire thermoplastique **caractérisé en ce qu'**il comprend les étapes suivantes :
- dépôt d'un empilement de couches réfléchissant le rayonnement infrarouge compris entre 780 nm et 2500 nm sur une face interne de la première feuille de verre,
- dépôt sur ledit empilement d'une couche polymérique ou d'un vernis comprenant un agent colorant, ledit agent colorant absorbant sensiblement la totalité de la lumière située dans le domaine du visible et étant sensiblement transparent aux infrarouges,
- séchage et/ou éventuellement durcissement de la couche polymérique ou du vernis comprenant l'agent colorant,
- assemblage de la feuille de verre revêtue de l'empilement de couches et de la couche polymérique colorée avec un intercalaire thermoplastique transparent non coloré, en particulier un PVB non coloré, et avec la deuxième feuille de verre, de telle sorte que la couche polymérique colorée soit en contact direct avec ledit intercalaire,
- dégazage pendant lequel l'air piégé entre les feuilles de verre et l'intercalaire thermoplastique est éliminé, et
- traitement thermique sous pression et/ ou sous vide du verre feuilleté à une température comprise entre 100 et 200°C pendant lequel l'assemblage du vitrage feuilleté est effectué.

## Patentansprüche

1. Verbundverglasung, umfassend eine äußere Klarglasscheibe (1) und eine innere Klarglasscheibe (5), die mittels einer Zwischenlage (8) miteinander verbunden sind, umfassend die Abfolge der folgenden Elemente von der Innenseite (6) zur Außenseite (7) der Verglasung:
- die innere Klarglasscheibe (5),
- einen Stapel von Lagen (4), die Infrarotstrahlung im Bereich von 780 nm bis 2500 nm reflektieren,
- wobei die Zwischenlage (8) umfasst:
a) eine erste Schicht (2), die eine Lage aus einer polymeren Verbindung oder einem Lack umfasst oder daraus besteht, wobei die Polymerverbindung oder der Lack ein Färbemittel umfasst, wobei das Färbemittel im Wesentlichen das gesamte Licht im sichtbaren Bereich zwischen 380 und 780 nm absorbiert und für Infrarotstrahlung, insbesondere mit einer Wellenlänge zwischen 800 und 2000 nm, im Wesentlichen transparent ist,
b) eine zweite Schicht (3) aus einem nicht durchgefärbten Kunststoff, vorzugsweise einem Thermoplast, insbesondere einem klaren PVB,
- die äußere Klarglasscheibe (1).

2. Verbundverglasung nach Anspruch 1, wobei der Farbstoff, gemessen mit einem Perkin-Elmer-Spektralphotometer vom Typ Lambda 900, ein Absorptionsspektrum zwischen 380 und 2000 nm bei einer Konzentration von 0,5 Masse-% in einer 0,25 Millimeter dicken Lage der Polymerverbindung oder des Lacks aufweist, wobei eine zwischen 800 und 2000 nm gemittelte Absorption mindestens 5-mal kleiner ist als die zwischen 380 und 780 nm gemittelte Absorption und vorzugsweise mindestens 7-mal kleiner oder sogar mindestens 10-mal kleiner ist.

3. Verbundverglasung nach Anspruch 1, wobei der Farbstoff in der Matrix der Polymerverbindung und bei 25 °C einen mittleren molaren Extinktionskoeffizienten zwischen 780 nm und 2000 nm aufweist, der mindestens 5-mal kleiner ist als der mittlere molare Extinktionskoeffizient zwischen 380 nm und 780 nm, und vorzugsweise mindestens 7-mal kleiner oder sogar mindestens 10-mal kleiner ist.

4. Verbundverglasung nach einem der vorstehenden Ansprüche, wobei der Stapel von Infrarotstrahlung reflektierenden Lagen ein Stapel ist, der mindestens zwei Funktionslagen auf Silberbasis umfasst, die durch Lagen aus dielektrischen Materialien, insbesondere Oxiden oder Nitriden, voneinander getrennt sind.

5. Verbundverglasung nach einem der vorstehenden Ansprüche, wobei die Polymerverbindung der ersten Schicht (2) ausgewählt ist aus Monomeren, Oligomeren oder Polymeren, die mindestens eine Methacrylatfunktion umfassen, Epoxiden, Lacken mit dispergierten PVB-, Latex-, Polyurethan- oder Acrylatpartikeln.

6. Verbundverglasung nach einem der vorstehenden Ansprüche, wobei das Färbemittel ausgewählt ist aus Sudan Black B^{®} (CAS 4197-25-5) oder Nigrosine Solvent black 5 (CAS 11099-03-9) und vorzugsweise Sudan Black B^{®} ist.

7. Verbundverglasung nach einem der vorstehenden Ansprüche, wobei das Färbemittel zwischen 0,1 und 10 Gew.-% der ersten Schicht, vorzugsweise zwischen 0,2 und 3 Gew.-% der ersten Schicht, ausmacht.

8. Verbundverglasung nach einem der vorstehenden Ansprüche, wobei die zweite Schicht (3) aus ungefärbtem Kunststoff aus Polyvinylbutyral (PVB), Ethylen-Vinylacetat-Copolymeren (EVA), Polyurethan (PU) oder Poly(vinylchlorid) (PVC), vorzugsweise aus PVB, besteht.

9. Verbundverglasung nach einem der Ansprüche 1 bis 7,
**dadurch gekennzeichnet, dass** die zweite Schicht (3) aus zwei Lagen aus Polyvinylbutyral besteht, zwischen denen eine Scheibe aus Poly(ethylenterephthalat) angeordnet ist.

10. Verbundverglasung nach einem der vorstehenden Ansprüche,
**dadurch gekennzeichnet, dass** die Glasscheiben eine Dicke zwischen 0,7 und 5 mm, bevorzugt zwischen 1,6 und 3,1 mm, aufweisen.

11. Verbundverglasung nach einem der vorstehenden Ansprüche, wobei der Stapel von Lagen ein System aus dünnen Lagen mit Dicken zwischen 0,5 und 100 nm ist, das eine oder mehrere Lagen auf Silberbasis umfasst, vorzugsweise mindestens zwei Lagen auf Silberbasis umfasst.

12. Verbundverglasung nach einem der vorstehenden Ansprüche, wobei die Zwischenlage aufeinanderfolgend, bezogen auf die innere Glasscheibe, umfasst: die erste Schicht (2), die eine Lage aus einer Polymerverbindung oder einem Lack umfasst oder daraus besteht, dann die Polymerverbindung oder der Lack ein Färbemittel umfasst, dann die zweite Schicht (3) aus einem nicht durchgefärbten Kunststoff.

13. Verbundverglasung nach einem der vorstehenden Ansprüche, wobei die Zwischenlage aufeinanderfolgend, bezogen auf die innere Glasscheibe, umfasst: die zweite Schicht (3) aus einem nicht durchgefärbten Kunststoff, dann die erste Schicht (2), die eine Lage aus einer Polymerverbindung oder einem Lack umfasst oder daraus besteht, dann die Polymerverbindung oder der Lack, die/der ein Färbemittel umfasst.

14. Verwendung einer Verbundverglasung nach einem der Ansprüche 1 bis 13 als Dach, Seitenfenster oder Heckscheibe von Kraftfahrzeugen.

15. Verfahren zur Herstellung einer Verbundverglasung nach einem der Ansprüche 1 bis 13, die mindestens eine erste und eine zweite Glasscheibe umfasst, wobei die beiden Scheiben durch eine thermoplastische Zwischenlage miteinander verbunden sind, **dadurch gekennzeichnet, dass** es die folgenden Schritte umfasst:
- Aufbringen eines Stapels von Lagen, die Infrarotstrahlung zwischen 780 nm und 2500 nm reflektieren, auf eine Innenseite der ersten Glasscheibe,
- Aufbringen einer Polymerlage oder eines Lacks, die/der ein Färbemittel umfasst, auf den Stapel, wobei das Färbemittel im Wesentlichen das gesamte Licht im sichtbaren Bereich absorbiert und für Infrarotstrahlung im Wesentlichen transparent ist,
- Trocknen und/oder gegebenenfalls Aushärten der Polymerlage oder des Lacks, der das Färbemittel umfasst,
- Zusammenfügen der mit dem Stapel von Lagen beschichteten Glasscheibe und der gefärbten Polymerlage mit einer ungefärbten transparenten thermoplastischen Zwischenlage, insbesondere ungefärbtem PVB, und mit der zweiten Glasscheibe, so dass die gefärbte Polymerlage in direktem Kontakt mit der Zwischenlage steht,
- Entgasung, während der die zwischen den Glasscheiben und der thermoplastischen Zwischenlage eingeschlossene Luft entfernt wird, und
- Wärmebehandlung des Verbundglases unter Druck und/oder unter Vakuum bei einer Temperatur zwischen 100 und 200 °C, während der der Zusammenbau der Verbundverglasung erfolgt.

## Claims

1. A laminated glazing comprising an outer sheet of clear glass (1) and an inner sheet of clear glass (5), which are bonded to one another by means of an interlayer (8), comprising the succession of the following elements, from the inside (6) to the outside (7) of said glazing:
- said inner sheet of clear glass (5),
- a stack of layers (4) reflecting infrared radiation between 780 nm and 2500 nm,
- said interlayer (8) comprising:
a) a first thin sheet (2) comprising or consisting of a layer of a polymer compound or of a varnish, said polymer compound or said varnish comprising a dye, said dye absorbing substantially all of the light within the visible region between 380 and 780 nm and being substantially transparent to infrared radiation, notably of wavelength between 800 and 2000 nm,
b) a second thin sheet (3) of a plastic that is not bulk-tinted, preferably thermoplastic, notably a clear PVB,
- said outer sheet of clear glass (1).

2. The laminated glazing as claimed in claim 1, in which said dye has, as measured with a Perkin-Elmer lambda 900 spectrophotometer, an absorption spectrum between 380 and 2000 nm, at a concentration of 0.5 wt% in a layer with a thickness of 0.25 millimeters of said polymer compound or of said varnish, an averaged absorbance between 800 and 2000 nm at least 5 times lower than the averaged absorbance between 380 and 780 nm and preferably at least 7 times lower, or even at least 10 times lower.

3. The laminated glazing as claimed in claim 1, in which said dye has, in the matrix of said polymer compound and at 25°C, an average molar extinction coefficient between 780 nm and 2000 nm at least 5 times less than the average molar extinction coefficient between 380 nm and 780 nm, and preferably at least 7 times lower, or even at least 10 times lower.

4. The laminated glazing as claimed in one of the preceding claims, in which the stack of layers reflecting infrared radiation is a stack comprising at least two functional layers based on silver separated by layers of dielectric materials, in particular oxides or nitrides.

5. The laminated glazing as claimed in one of the preceding claims, in which the polymer compound of the first thin sheet (2) is selected from monomers, oligomers, or polymers comprising at least one methacrylate function, epoxides, varnish comprising dispersed particles of PVB, latex, polyurethane or acrylate.

6. The laminated glazing as claimed in one of the preceding claims, in which the dye is selected from Sudan Black B^{®} (CAS 4197-25-5) or Nigrosine Solvent black 5 (CAS 11099-03-9), and is preferably Sudan Black B^{®}.

7. The laminated glazing as claimed in one of the preceding claims, in which the dye represents between 0.1 and 10 wt% of the first thin sheet, preferably between 0.2 and 3 wt% of the first thin sheet.

8. The laminated glazing as claimed in one of the preceding claims, in which the second thin sheet (3) of an undyed plastic is of polyvinyl butyral (PVB), ethylene/vinyl acetate copolymers (EVA), polyurethane (PU) or polyvinyl chloride (PVC), and is preferably of PVB.

9. The laminated glazing as claimed in one of claims 1 to 7, **characterized in that** the second thin sheet (3) consists of two sheets of polyvinyl butyral with a sheet of poly(ethylene terephthalate) disposed between them.

10. The laminated glazing as claimed in one of the preceding claims, **characterized in that** the glass sheets have a thickness between 0.7 mm and 5 mm and preferably between 1.6 mm and 3.1 mm.

11. The laminated glazing as claimed in one of the preceding claims, in which the stack of layers is a system of thin layers with thicknesses between 0.5 and 100 nm which comprises one or more layers based on silver, preferably which comprises at least two layers based on silver.

12. The laminated glazing as claimed in one of the preceding claims, in which the interlayer comprises successively, with reference to the inner glass sheet: said first thin sheet (2) comprising or consisting of a layer of a polymer compound or of a varnish, then said polymer compound or said varnish comprising a dye, and then said second thin sheet (3) of a plastic that is not bulk-tinted.

13. The laminated glazing as claimed in one of the preceding claims, in which the interlayer comprises successively, with reference to the inner glass sheet: said second thin sheet (3) of a plastic that is not bulk-tinted, then said first thin sheet (2) comprising or consisting of a layer of a polymer compound or of a varnish and then said polymer compound or said varnish comprising a dye.

14. The use of the laminated glazing as claimed in one of claims 1 to 13 as the roof, side window, or back window of motor vehicles.

15. A method of manufacturing the laminated glazing as claimed in one of claims 1 to 13, comprising at least one first glass sheet and one second glass sheet, the two sheets being bonded together by a thermoplastic interlayer, **characterized in that** it comprises the following steps:
- depositing a stack of layers reflecting infrared radiation between 780 nm and 2500 nm on an inner face of the first glass sheet,
- depositing, on said stack, a polymer layer or a varnish comprising a dye, said dye absorbing substantially all of the light within the visible region and being substantially transparent to the infrared,
- drying and/or optionally hardening the polymer layer or varnish comprising the dye,
- assembling the glass sheet covered with the stack of layers and the colored polymer layer with an undyed transparent thermoplastic interlayer, in particular an undyed PVB, and with the second glass sheet, in such a way that the colored polymer layer is in direct contact with said interlayer,
- degassing, during which the air trapped between the glass sheets and the thermoplastic interlayer is eliminated, and
- heat treating the laminated glass under pressure and/or under vacuum at a temperature between 100 and 200°C, during which assembly of the laminated glazing is effected.
